# EUROPEAN PATENT APPLICATION

(11) **EP 1 235 145 A2**
(43) Date of publication of application: **28.08.2002**
(21) Application number: 02000296.0
(22) Date of filing: 16.01.2002
(51) Int. Cl.: G06F 9/44

(54) **Information terminal device and program executed thereon**

(30) Priority: 19.01.2001 JP 2001011255; 25.01.2001 JP 2001017404
(71) Applicant: MATSUSHITA ELECTRIC INDUSTRIAL CO., LTD., Kadoma-shi, Osaka-fu (JP)
(72) Inventor: Mizuyama, Masashige, Neyagawa-shi, Osaka-fu (JP); Kobayashi, Takuya, Neyagawa-shi, Osaka-fu (JP); Kato, Atsunobu, Ebina-shi, Kanagawa-ken (JP); Shin, Hidehiko, Moriguchi-shi, Osaka-fu (JP); Inami, Satoshi, Moriguchi-shi, Osaka-fu (JP)
(74) Representative: Lang, Johannes, Dipl.-Ing.

(57) **Abstract**

An information terminal device (10) is connected to a server 1 storing instruction data (200). For the received instruction data (200), a determining unit (104) determines the corresponding application. An analyzing unit (105) analyzes the instruction data (200). An operation control unit (106) extracts message data from the instruction data (200). An application executing unit (107) operates based on the instruction data and the above application. A display unit (19) displays a message represented by the message data on a screen based on the execution of the application. With an execution checking unit further provided, it is possible to determine whether the application is to be executed based on the message data.

## Description

### BACKGROUND OF THE INVENTION

### Field of the Invention

The present invention relates to information terminal devices and programs executed thereon and, more specifically, to an information terminal device capable of data communications and a program executed thereon.

### Description of the Background Art

Conventionally, an application operating on information terminal devices typified by cellular phone terminal devices is incorporated therein prior to shipment, or incorporated by loading from an external source. The application incorporated in the information terminal device determines a message displayed thereon, such as a pop-up message. Therefore, only the message previously determined by the application can be displayed on the information terminal device.

When the message displayed on the information terminal device is changed, the application incorporated therein has to be changed. For changing the application, ROM or other memory in the information terminal device has to be rewritten via a connection cable connected thereto by following a predetermined procedure. Such changing procedure is complex, involving a lot of processes, and thus is generally difficult to achieve.

Meanwhile, the information terminal device can execute predetermined processing (such as downloading application software), based on instruction data (including command script and program code) for making an instruction for carrying out the processing. Such instruction data is received over an information communications network such as the Internet. For processing execution based on the instruction data linked from hypertext, validity of the instruction data itself should be checked. For example, it should be checked whether the instruction data was created by an authorized person, or whether the instruction data does not include harmful processing. Such check for validity has conventionally been realized with a signing or sandbox scheme.

Although the above conventional schemes can verify the instruction data itself, they cannot check whether the instruction data matches the linking hypertext. The linking hypertext can be created by anyone, authorized or unauthorized. Therefore, if the linking hypertext has a false description in an anchor, for example, the false description would lead user to select the anchor, causing unexpected processing to be carried out.

### SUMMARY OF THE INVENTION

Therefore, an object of the present invention is to provide an information terminal device capable of changing a message displayed thereon without changing an application incorporated therein. Another object of the present invention is to provide an information terminal device capable of checking the validity of execution of processing by using the message.

The present invention has the following features to attain the object above.

A first aspect of the present invention is directed to an information terminal device for processing an instruction data describing an instruction for processing an application transmitted from a server capable of data communications and stored in the information terminal device. The information terminal device includes a receiving unit for receiving the instruction data transmitted from the server; an analyzing unit for analyzing at least message data representing a message for display to a user and operation data representing an operation both included in the instruction data ; an operation control unit for extracting the message data analyzed by the analyzing unit, and generating a display message by replacing at least part of a default message previously set for display to the user with the message represented by the message data; and a display unit for displaying to the user the display message generated by the operation control unit. According to the above structure, at least part of the default message is replaced with the message represented by the message data by using the instruction data received from the server. Thus, it is possible to change a message for display to the user without changing the program itself related to the default message previously set for display to the user.

The information terminal device preferably further includes a determining unit for determining the application corresponding to the instruction data; and an application executing unit for carrying out an operation based on the application determined by the determining unit by following the operation data. The default message is described in the application determined by the determining unit. Based on the operation of the application executing unit, the display unit displays on a screen the display message generated by the operation control unit. Thus, it is possible to change the message described in the application and displayed on the information terminal device without changing the application itself previously incorporated in the information terminal device.

Furthermore, the message represented by the message data may be displayed on the screen of the display unit when the application is activated by the application executing unit. In this case, the message related to the application is displayed at the time of activating the application operable on the information terminal device.

When the operation control unit cannot extract the message data analyzed by the analyzing unit, the operation control unit preferably sets the default message as the display message. Thus, even if the instruction data does not include the message data, the default message previously set in the information terminal device is displayed for achieving the normal operation.

By way of example only, the operation control unit and the application executing unit are previously incorporated in the application. Since the operation control unit is previously incorporated as the application in the information terminal device, the information terminal device of the present invention can be easily achieved.

Also, by way of example only, the operation control unit and the application executing unit are implemented by a Java applet operated on a Java VM (Virtual Machine). The Java applet is retrieved from a server on the Internet. Thus, any application can be arbitrarily retrieved from the server on the Internet.

The information terminal device preferably further includes a determining unit for determining the application corresponding to the instruction data; an execution checking unit for determining whether the application is to be executed based on the message data extracted by the operation control unit ; and an application executing unit for carrying out an operation based on said application when it is determined by said execution checking unit that said application is to be executed, by following said operation data analyzed by said analyzing unit. As such, whether the application corresponding to the instruction data transmitted from the server is to be executed is first determined by the execution checking unit. Then, if it is determined that the application is to be executed, the validity of the instruction data is checked. Based on the check result, whether to execute the application is determined.

Furthermore, the message data is a character string describing the instruction of the instruction data. Thus, the information terminal device or the user can check the instruction included in the instruction data irrespectively of the description such as an anchor character string of linking hypertext of the instruction data stored in the server.

By way of example only, the display unit displays the display message generated by the operation control unit for prompting the user to answer whether to execute the application, and when the user enters an answer as to whether to execute the application based on the display message displayed on the display unit, the execution checking unit determines whether the application is to be executed. Thus, the user can view the instruction of the instruction data displayed on the display unit to determine whether to execute the application. Therefore, processing unexpected by the user based on the instruction data can be prevented.

Also, by way of example only, when a character string contained in an anchor of linking hypertext of the instruction data stored in the server matches the message data, the execution checking unit determines that the application is to be executed. Thus, if the anchor character string of the linking hypertext of the instruction data stored in the server has a false description, processing based on the instruction data can be automatically prevented by the execution checking unit.

The instruction data preferably includes digital signature data representing validity of the instruction data, and the determining unit may further verify the digital signature data included in the instruction data, and determines the application corresponding to the instruction data only when the digital signature data satisfies a predetermined condition. As such, the determining unit checks the validity of the received instruction data by the digital signature data. For the instruction data having low validity, the subsequent processing is not executed. Therefore, execution based on the low-validity instruction data can be prevented.

A second aspect of the present invention is directed to a computer program executed on a computer, the computer program for processing an instruction data describing an instruction for processing an application transmitted from a server capable of data communications and stored in the computer. The computer program includes a receiving step of receiving the instruction data transmitted from the server; an analyzing step of analyzing at least message data representing a message for display to a user and operation data representing an operation both included in the instruction data; an operation controlling step of extracting the message data analyzed in the analyzing step, and generating a display message by replacing at least part of a default message previously set for display to the user with the message represented by the message data; and a displaying step of displaying to the user the display message generated in the operation control step.

The computer program preferably further includes a determining step of determining the application corresponding to the instruction data; and an application executing step of carrying out an operation based on the application determined in the step by following the operation data. The default message is described in the application determined in the determining step . In the displaying step, the display message generated in the operation control step is displayed based on the operation in the application executing step.

Furthermore, the message represented by the message data may be displayed on the screen in the displaying step when the application is activated in the application executing step.

When the message data analyzed in the analyzing step cannot be extracted in the operation controlling step, the default message is preferably set as the display message.

By way of example only, the operation controlling step and the application executing step are previously incorporated in the application.

Also, by way of example only, the operation controlling step and the application executing step are implemented by a Java applet operated on a Java VM (Virtual Machine). The Java applet is retrieved from a server on the Internet.

The computer program preferably further includes a determining step of determining the application corresponding to the instruction data; an execution checking step of determining whether the application is to be executed based on the message data extracted in the operation controlling step; and an application executing step of carrying out an operation based on said application when it is determined in said execution checking step that said application is to be executed, by following said operation data analyzed in said analyzing step.

Furthermore, the message data is a character string describing the instruction of the instruction data.

By way of example only, in the display step, the display message generated in the operation control step is displayed for prompting the user to answer whether to execute the application. When the user enters an answer as to whether to execute the application based on the display message displayed in the display step, whether the application is to be executed is determined in the execution checking step

Also, by way of example only, 2hen a character string contained in an anchor of linking hypertext of the instruction data stored in the server matches the message data, it is determined in the execution checking step that the application is to be executed. The instruction data preferably includes digital signature data representing validity of the instruction data. In the determining step, the digital signature data included in the instruction data is further verified, and the application corresponding to the instruction data is determined only when the digital signature data satisfies a predetermined condition.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a schematic diagram showing the structure of a communications system including an information terminal device according to a first embodiment of the present invention;
FIG. 2 is a block diagram showing example hardware structure of the information terminal device 10 shown in FIG. 1;
FIG. 3 is a functional block diagram showing example functional structure embodied by the information terminal device 10 of FIG. 1 executing a program according to the present invention;
FIG. 4 is a flowchart showing the entire operation of the information terminal device 10 of FIG. 1;
FIG. 5 is a flow of a subroutine showing the detailed operation of step S13 of FIG. 4;
FIG. 6 is an example illustration of the instruction data 200 of FIG. 3;
FIG. 7 is an example illustration of instruction data 200 of FIG. 6 as divided into tag names and values as a result of analyzing processing;
FIG. 8 is a flow of a subroutine showing the detailed operation of step S15 of FIG. 14;
FIG. 9 is an example illustration of messages displayed on a display unit 19 of FIG. 2
FIG. 10 is a functional block diagram showing an example functional structure embodied by an information terminal device 10 according to a second embodiment executing a program according to the present invention;
FIG. 11 is an example illustration of the instruction data 200 of FIG. 10;
FIG. 12 is a flow of a subroutine showing the detailed operation of step S16 of FIG. 10 carried out by the information terminal device 10 of FIG. 10;
FIG. 13 is an example illustration showing an execution check screen displayed in step S161 on the information terminal device 10 of FIG. 10; and
FIG. 14 is a flow of a subroutine showing step S16 of FIG. 4 when the information terminal device 10 of FIG. 10 automatically determines whether to execute the application.

### DESCRIPTION OF THE PREFERRED EMBODIMENTS

### (First embodiment)

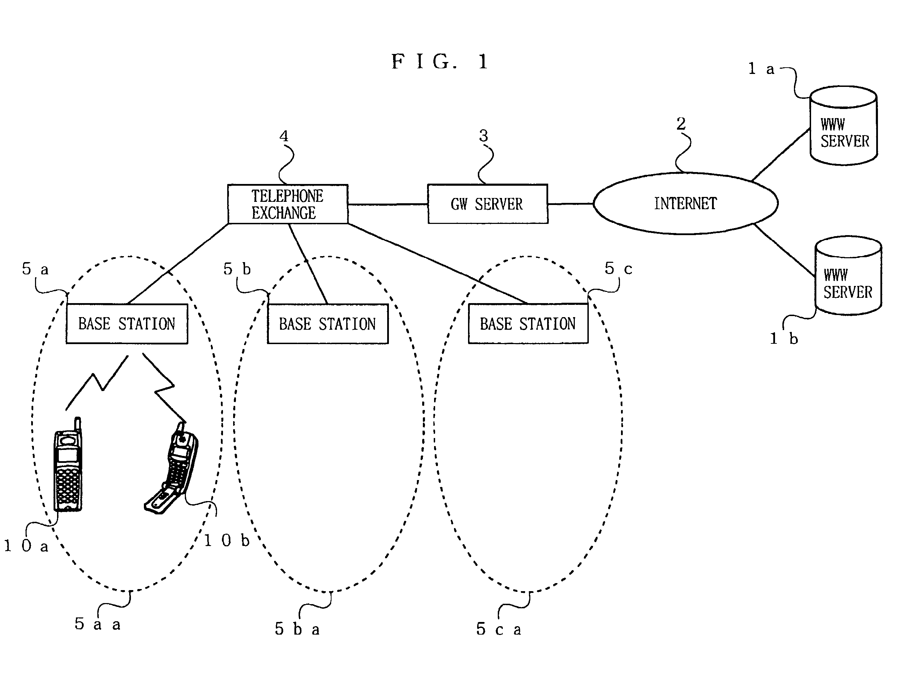

FIG. 1 is a schematic diagram showing the structure of a communications system including an information terminal device according to a first embodiment of the present invention. Here, the information terminal device is a device capable of data communications, typically a portable information terminal such as a cellular phone terminal. Described below is the communications system including the information terminal device.

In FIG. 1, WWW servers 1a and 1b and a gateway (GW) server 3 are connected to the Internet 2. To the GW server 3, base stations 5a to 5c are connected via a telephone exchange 4. The base stations 5a to 5c manage wireless zones 5aa to 5ca, respectively. An information terminal device 10 can be located in any one of the wireless zones 5aa to 5ca. Using digital communications technology such as CDMA (Code Division Multiple Access) or TDMA (Time Division Multiple Access), the information terminal device 10 can wirelessly communicate with the base station that manages the wireless zone where the device are located. The WWW servers 1a and 1b respectively hold text data and image data described in hypertext language such as HTML (Hyper Text Markup Language) and XML (eXtensible Markup Language). For example, as shown in FIG. 1, information terminal devices 10a and 10b located in the wireless zone 5aa retrieve data from the WWW server 1a via the Internet 2, the GW server 3, the telephone exchange 4, and the base station 5a, and display text and/or images on a display screen provided on the information terminal devices 10a and 10b.

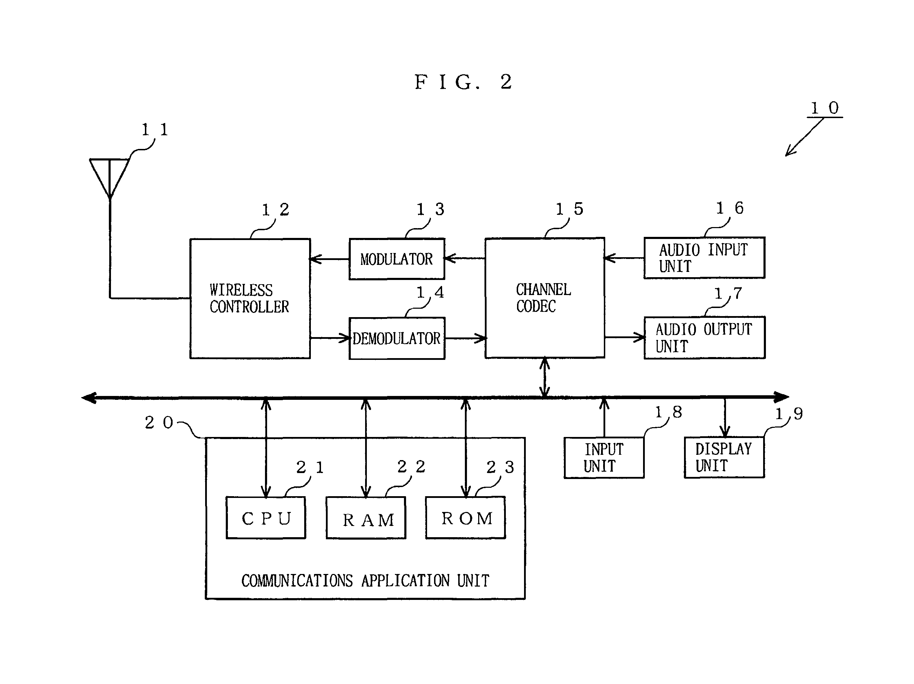

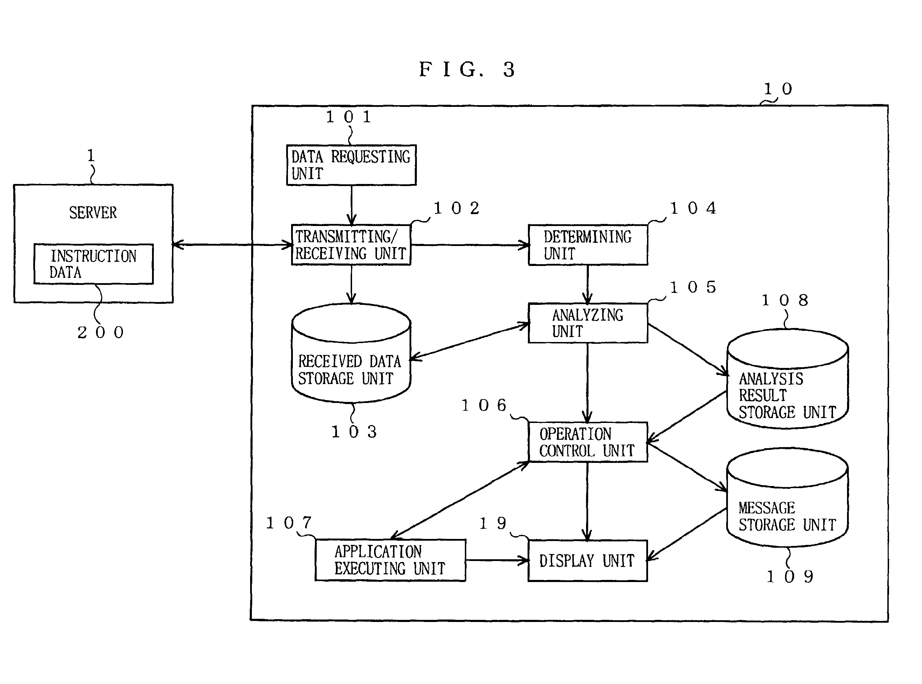

FIG. 2 is a block diagram showing example hardware structure of the information terminal device 10. FIG. 3 is a functional block diagram showing example functional structure embodied by the information terminal device 10 executing a program according to the present invention. Note that the program can be installed in another information terminal device via an appropriate storage medium having the program stored thereon, thereby achieving similar functions on the other information terminal device. With reference to FIGS. 2 and 3, described below is the structure of the information terminal device 10.

In FIG. 2, the information terminal device 10 includes an antenna 11, a wireless controller 12, a modulator 13, a demodulator 14, a channel CODEC (Coder-Decoder) 15, an audio input unit 16, an audio output unit 17, an input unit 18, a display unit 19, and a communications application unit 20. The wireless controller 12 can send out data modulated by the modulator 13 on a radio carrier wave from the antenna 11, and also can receive a signal of a predetermined frequency band from among highfrequency signals induced at the antenna 11. The modulator 13 modulates transmission data outputted from the channel CODEC 15 with a predetermined modulation scheme (for example, π/4 shift DQPSK modulation scheme), and outputs the modulated transmission data to the wireless controller 12. The demodulator 14 demodulates a signal received at the wireless controller 12, and gives the demodulated signal to the channel CODEC 15. The channel CODEC 15 outputs the data supplied by the demodulator 14 to the audio output unit 17 or the communications application unit 20. The channel CODEC 15 also outputs audio supplied by the audio input unit 16 to the modulator 13 or the communications application unit 20. The channel CODEC 15 further outputs data supplied by the communications application unit 20 to the modulator 13 or the audio output unit 17. The input unit 18 is implemented by a keyboard, a button, or the like, for supplying an input such as a dial number, display screen operation data, or others. The display unit 19 is implemented by a liquid crystal display device or others for displaying the data outputted from the communications application unit 20 and/or providing a vibration output, for example. The communications application unit 20 includes a CPU 21, RAM 22, and ROM 23, for example, for controlling communications connection of the information terminal device, and controlling processing of transmission/receive data, such as generating transmission data, storing received data, and displaying images based on the received data.

In FIG. 3, as stated above, the information terminal device 10 is connected to the server 1 on the Internet. The server 1 holds image data, HTML data, XML data, and also instruction data describing an instruction to the information terminal device 10. Upon request from the information terminal device 10, the server 1 sends out the above data to the information terminal device 10.

The information terminal device 10 includes a data requesting unit 101, which corresponds to the input unit 18. Using the data requesting unit 101, the user supplies an input to the information terminal device 10 for requesting instruction data 200. The information terminal device 10 also includes a transmitting/receiving unit 102, which corresponds to the antenna 11, the wireless controller 12, the modulator 13, the demodulator 14, and the channel CODEC 15. The transmitting/receiving unit 102 carries out transmitting/receiving processing with the server located at a URL (Uniform Resource Locator) included in the request supplied from the data requesting unit 101, and retrieves the instruction data 200 from the server. Furthermore, the information terminal device 10 includes, in the communications application unit 20, a received data storage unit 103, a determining unit 104, an analyzing unit 105, an operation control unit 106, an application executing unit 107, an analysis result storage unit 108, and a message storage unit 109. The received data storage unit 103 stores the instruction data 200 retrieved by the transmitting/receiving unit 102. The determining unit 104 selects and determines an application corresponding to the instruction data 200 stored in the received data storage unit 103. The analyzing unit 105 analyzes the instruction data 200 stored in the received data storage unit 103. The analysis result storage unit 108 stores analysis result data obtained by analyzing the instruction data 200 at the analyzing unit 105. The operation control unit 106 extracts, from the analysis result data of the instruction data 200, data representing a message for display (hereinafter, message data), and stores the extracted message data in the message storage unit 109. Furthermore, based on the application executed by the application executing unit 107, the operation control unit 106 causes the display unit 19 provided on the information terminal device 10 to display the message based on the message data stored in the message storage unit 109.

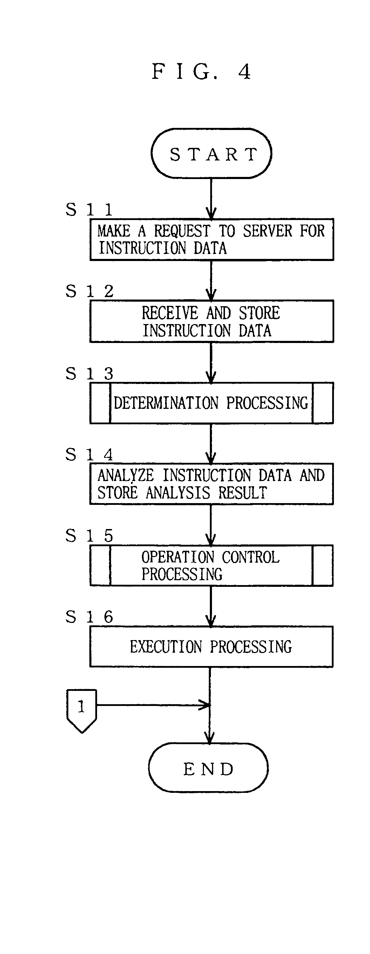

Described next is the operation of the information terminal device 10 with reference to FIG. 4, which is a flowchart showing the entire operation of the information terminal device 10.

In FIG. 4, the information terminal device 10 accesses to the server 1, causing screen display on a WEB browser. Then, by selecting an anchor character string of linking hypertext displayed on the screen with the data requesting unit 101, the user requests the instruction data 200 (step S11). The procedure then goes to the next step.

The information terminal device 10 then receives, at the transmitting/receiving unit 102, the above instruction data 200 requested in step S11 from the server 1, and then stores it in the received data storage unit 103 (step S12). The procedure then goes to the next step.

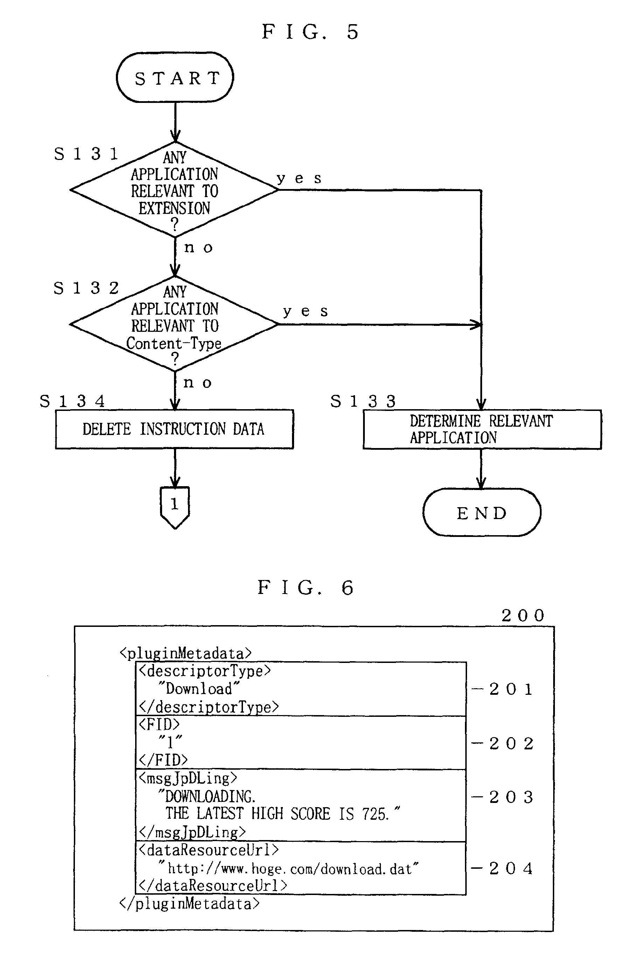

The information terminal device 10 determines, at the determining unit 104, which application should be activated for the instruction data 200 stored in the received data storage unit 103 in step S12 (step S13). FIG. 5 is a flow of subroutine showing the detailed operation of the above step S13. With reference to FIG. 5, step S13 is described.

In FIG. 5, for determining the application corresponding to the instruction data 200 stored in the received data storage unit 103 in the above step S12, the determining unit 104 determines whether any relevant application exists based on a file extension of the above instruction data 200 (step S131). Specifically, the determining unit 104 determines whether any relevant application is previously stored in the information terminal device 10 based on the file extension of the above instruction data 200. If any relevant application is found in step S131, the procedure goes to step S133. If not found, the procedure goes to step S132.

If no relevant application is found in step S131, the determining unit 104 further determines whether any relevant application is previously stored in the information terminal device 10 based on *Content-Type* provided to the header of the instruction data 200 (step S132). If any relevant application is found in step S132, the procedure goes to step S133. If not found, the determining unit 104 deletes the retrieved instruction data 200 from the received data storage unit 103 (step S134), and then ends the subroutine and the flow shown in FIG. 4.

On the other hand, if any relevant application is found in step S131 or S132, the determining unit 104 determines that the found application is to be processed (step S133), and ends the subroutine. Note that either step S131 or S132 may be processed first, or only one of these steps may be enough for determination. Furthermore, another step for determining the relevant application may be added, such as analyzing the description of the instruction data.

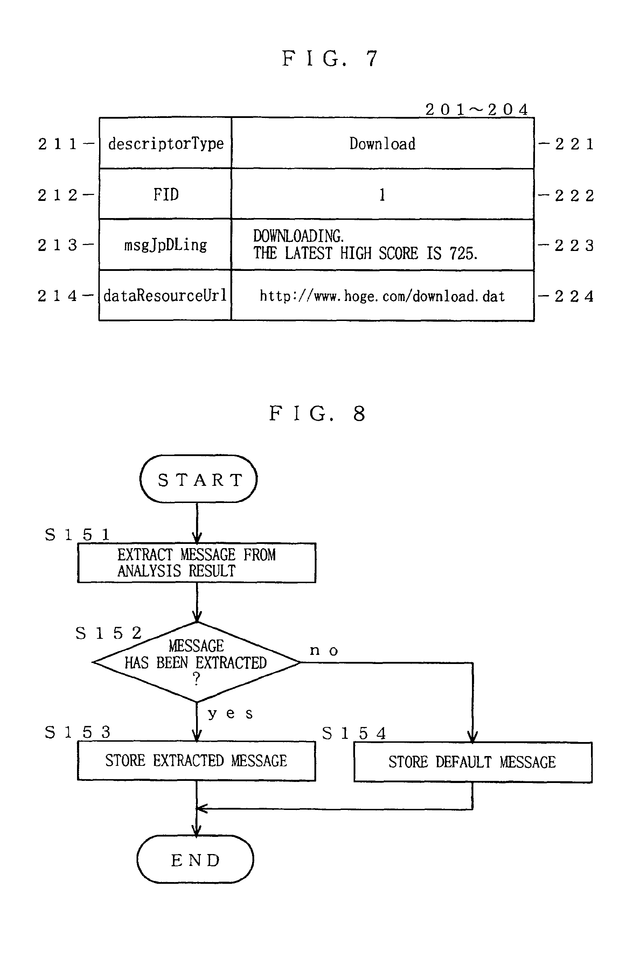

Referring back to FIG. 4, the information terminal device 10 analyzes the instruction data 200 at the analyzing unit 105, and stores the analysis result in the analysis result storage unit 108 (step S14). FIG. 6 is an example illustration showing the instruction data 200. FIG. 7 is an example illustration of the instruction data 200 divided into a tag name and an element by the analyzing processing of the above step S14. With reference to FIGS. 6 and 7, described below is the operation in the above step S14.

FIG. 6 is an example illustration of the instruction data 200 received by the information terminal device 10. This instruction data 200 is described in XML (eXtensible Markup Language) format. The instruction data 200 includes an instruction for changing the message based on data being downloaded in the server 1.

In this format, the instruction data 200 can be divided into four data blocks 201 to 204, each defined by a pair of tags each composed of a tag name placed between "<" and ">". Between "<tag name>" and "</tag name>", an element is enclosed. The data block 201 has an element "Download" enclosed by tags having a tag name "descriptorType". The data block 202 has an element "1" enclosed by tags having a tag name "FID". The data block 203 has an element "Downloading. The latest high score is 725." enclosed by tags having a tag name "msgJpDling". The data block 204 has an element "http://www.hoge.com/download.dat" enclosed by tags having a tag name "dataResourceUrl". In step S14, the analyzing unit 105 divides the instruction data 200 into those data blocks, and analyzes the tag names and the elements included therein.

FIG. 7 shows data obtained by dividing the instruction data 200 in the above described manner. The data blocks 201 to 204 are related with tag names 211 to 214 and elements 221 to 224, respectively. For the data block 201, the tag name 211 "descriptorType" and the element 221 "Download" are extracted. For the data block 202, the tag name 212 "FID" and the element 222 "1" are extracted. For the data block 203, the tag name 213 "msgJpDLing" and the element 223 "Downloading. The latest high score is 725." are extracted. For the data block 204, the tag name 214 "dataResourceUrl" and the element 224 "http://www.hoge.com/download.dat" are extracted. The analyzing unit 105 relates these data blocks 201 to 204 with these tag names 211 to 214 and these elements 221 to 224, and stores the resultant data in the analysis result storage unit 108. Note that the instruction data 200 may be text data, image data, or multimedia data such as moving picture data.

Referring back to FIG. 4, the operation control unit 106 of the information terminal device 10 extracts the message for display on a screen from the analysis result in step S14, and then stores the extracted message in the message storage unit 109 (step S15). FIG. 8 is a flow of a subroutine showing the detailed operation of step S15. With reference to FIG. 8, described below is the detailed operation of step S15.

In FIG. 8, the operation control unit 106 extracts the message from the analysis result data stored in step S14 in the analysis result storage unit 108 (step S151). For example, in the example analysis result already described with reference to FIG. 7, extracted as the message data is the tag name 213 "msgJpDLing" and its related element 223 "Downloading. The latest high score is 725." The procedure then goes to the next step.

The operation control unit 106 then determines whether any message has been extracted in step S151 (step S152). If it is determined in step S152 that any message has been extracted, the procedure goes to step S153. On the other hand, if it is determined in step S152 that no message has been extracted, the procedure goes to step S154.

If it is determined in step S152 that any message has been extracted, the operation control unit 106 determines the extracted message for display, and stores the extracted message data in the message storage unit 109 (step S153). The procedure now ends.

On the other hand, if it is determined in step S152 that no message has been extracted, the operation control unit 106 determines a default message previously set in the information terminal device 10 for display, and stores data of the default message in the message storage unit 109 (step S154). The procedure now ends.

Referring back to FIG. 4, the application executing unit 107 of the information terminal device 10 executes the application stored in the information terminal device 10. Based on the executed application and the instruction data 200 to which the application corresponds, the operation control unit 106 causes the message stored in the above step S153 or S154 to be displayed on the display unit 19 (step S16). For example, in the example result of analyzing the instruction data 200 shown in FIG. 7, the tag name 211 "descriptorType" is related with the element 221 "Download". Therefore, this instruction data 200 represents that the message determined therein is displayed on the display unit 19 when the information terminal device 10 carries out downloading. In other words, in the example of the instruction data 200 shown in FIG. 7, the application is downloaded with the instruction data 200 provided thereto from the server 1. Thus, while downloading the application, the information terminal device 10 can cause the message determined in the instruction data 200 to be displayed on the display unit 19.

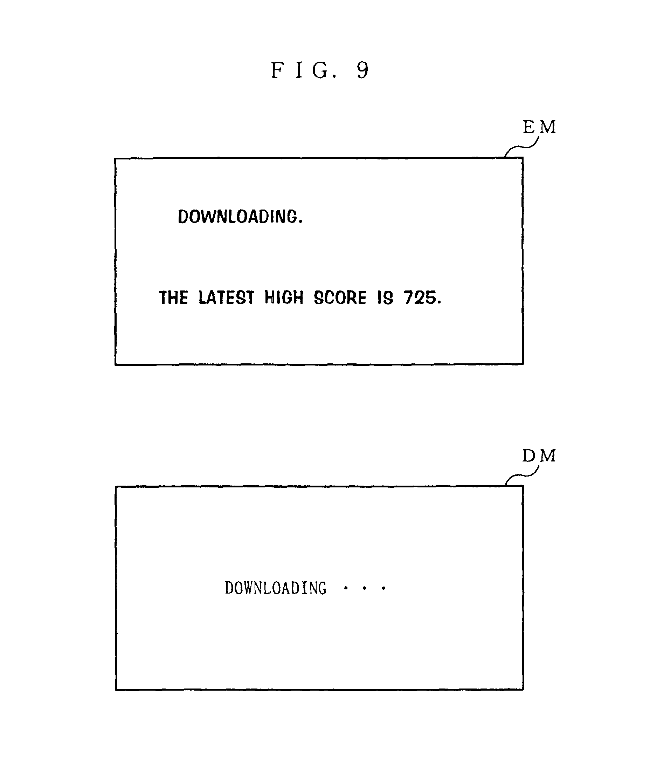

FIG. 9 is an example illustration of messages displayed on the display unit 19 based on the instruction data 200. In the above example of the instruction data 200, the element 223 "Downloading. The latest high score is 725. " is stored in step S153 as the extracted message to be displayed. Therefore, the element 223 "Downloading. The latest high score is 725." is displayed as an extracted message EM. On the other hand, if a default message DM such as "Downloading..." previously provided to the information terminal device 10 is determined to be displayed in step S154, the default message DM is displayed on the display unit 19.

Note that the execution processing in step S16 may not be limited to the above described downloading of the data from the server 1. Based on the instruction included in the instruction data 200, messages for various program processes can be displayed. For example, such execution processing may be uploading from the information terminal device 10 to the server 1. In this case, the information terminal device 10 accesses the server for selecting an anchor or the like related to uploading to retrieve the instruction data 200 for the uploading, and can display a message included in the instruction data 200 during the uploading. Alternatively, the information terminal device 10 retrieves the instruction data 200 related to the application previously stored in the information terminal device 10 or externally obtained, stores the message of the instruction data 200 in the message storage unit 109 after the step S15 ends, and then displays the message in relation to execution of the application. In this case, the message extracted from the instruction data 200 can be displayed on an application startup screen such as a pop-up screen (initial screen), or a screen displayed in the course of executing processing.

The application for operation control in the present embodiment may be previously incorporated in the information terminal device 10, or may be retrieved from a server on the Internet as a Java applet operating on known Java VMs (Virtual Machines).

As such, in the present embodiment, the message to be displayed on the information terminal device 10 can be changed without changing the application incorporated in the information terminal device 10.

### (Second embodiment)

Described next is an information terminal device according to a second embodiment of the present invention. Here, the information terminal device is a device capable of data communications, typically a portable information terminal such as a cellular phone terminal. Also, the information terminal device can display the message based on the instruction data described in the above first embodiment for checking security of execution of the application corresponding to the instruction data.

The communications system including in the information terminal according to the second embodiment is similar in structure to that according to the above first embodiment with reference to FIG. 1, and therefore not described in detail herein.

The information terminal device according to the second embodiment is similar in hardware structure to that according to the above first embodiment with reference to FIG. 2, and therefore not described in detail herein.

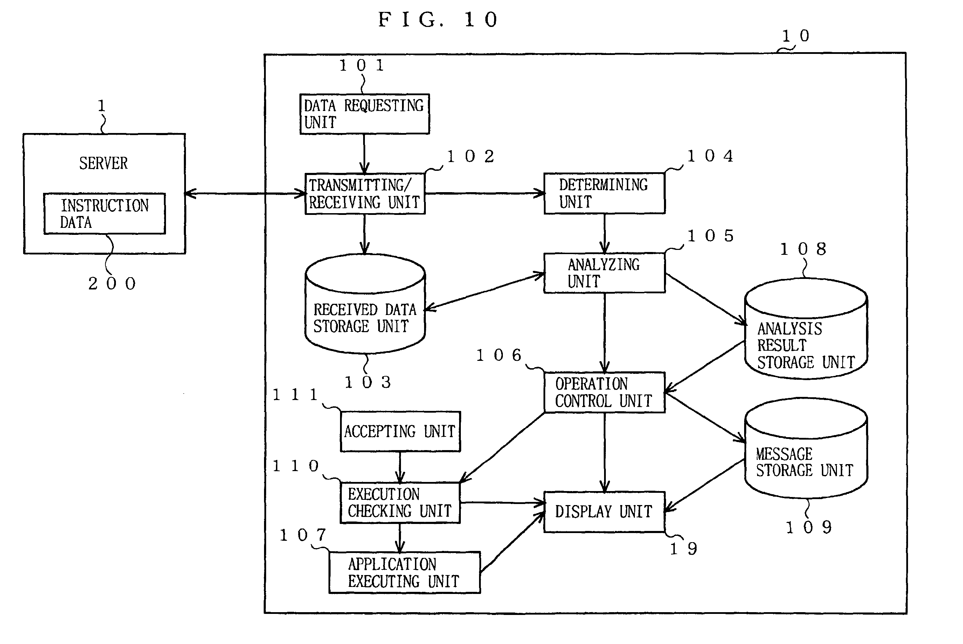

FIG. 10 is a functional block diagram showing an example functional structure embodied by an information terminal device 10 according to the second embodiment executing a program according to the present invention. Note that the program can be installed in another information terminal device via an appropriate storage medium having the program stored thereon, thereby achieving similar functions on the other information terminal device. With reference to FIG. 10, described below is the structure of the information terminal device 10.

The information terminal device 10 is similar to that according to the above first embodiment with reference to FIG. 3, with an execution checking unit 110 and an accepting unit 111 added thereto. The execution checking unit 110 is a functional block included in the communications application unit 20 of the information terminal device 10. Before the application executing unit 107 executes the application, the execution checking unit 110 is activated by instructions from the application executing unit 107 and the operation control unit 106, causing the application executing unit 107 to continue or end the processing being carried out therein by an instruction from the accepting unit 111. The accepting unit 111 corresponds to the input unit 18 for giving the execution checking unit 110 an instruction for continuing or ending the application processing. The other functional blocks are similar to those described in the above first embodiment, and therefore provided with the same reference numerals as those in the first embodiment and not described in detail herein.

Described next is the operation of the information terminal device 10. The operation of the information terminal device 10 is similar to that described with reference to the flowcharts of FIGS. 4, 5, and 8, except that the operation of step S16 shown in FIG. 4 is different. Therefore, in the second embodiment, only the execution processing of step S16 shown in FIG. 4 in the information terminal device 10 is described, and the other processing is not described in detail herein.

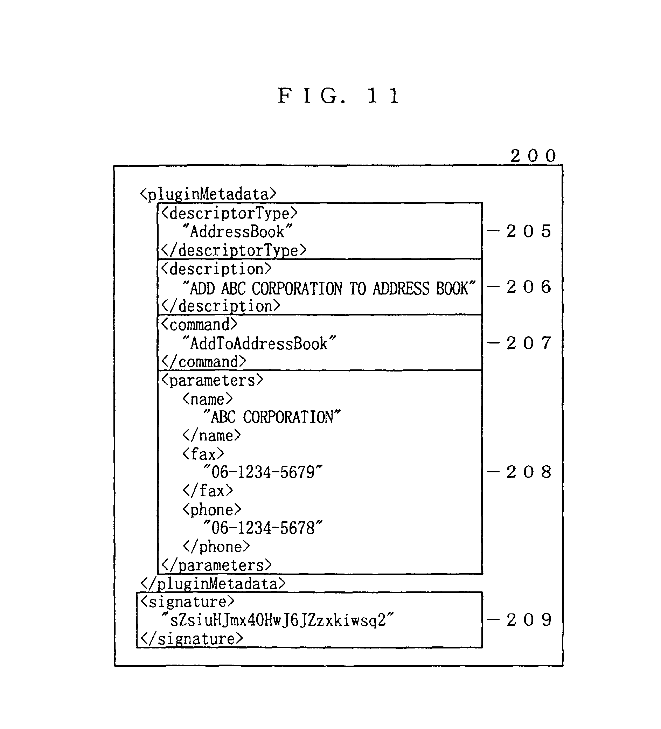

For simple description of the operation of the information terminal device 10, described first is one example of instruction data received by the information terminal device 10. FIG. 11 is an example illustration of the instruction data 200 received by the information terminal device 10, The instruction data 200 is described in XML format. This instruction data 200 represents an instruction that after displaying a message to the user, the information terminal device 10 downloads data held in the server 1 to add it to an address book stored in the information terminal device 10.

In this format, as with the above first embodiment, the instruction data 200 can be divided into five data blocks 205 to 209, each defined by a pair of tags each composed of a tag name placed between "<" and ">". Between "<tag name>" and "</tag name>", an element is enclosed. The data block 205 has an element "AddressBook" enclosed by tags having a tag name "descriptorType". The data block 206 has an element "add ABC corporation to the address book" enclosed by tags having a tag name "description". The data block 207 has an element "AddToAddressBook" enclosed by tags having a tag name "command". The data block 208 has elements "name", "fax", and "phone" enclosed by tags having a tag name "parameters". The data block 209 has an element "sZsiuHJmx40HwJ6JZzxkiwsq2" enclosed by tags having a tag name "signature".

In step S14 of FIG. 4, the analyzing unit 105 divides the instruction data 200 into data blocks in a similar manner to that according to the above first embodiment. The analyzing unit 105 then analyzes the tag name and the element for each data block, and stores the analysis result in the analysis result storage unit 108. The operation control unit 106 determines, as the extracted message, the element "add ABC corporation to the address book" enclosed by the tags having the tag name "description" included in the data block 206, and then stores data of the extracted message in the message storage unit 109.

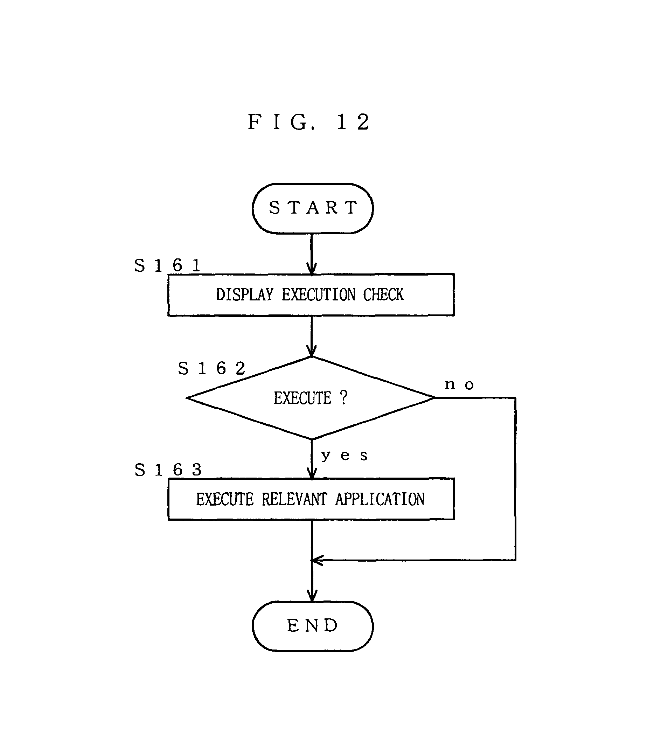

Next, the information terminal device 10 according to the second embodiment operates differently from that according to the above first embodiment. Described is execution processing shown in step S16 of FIG. 4. FIG. 12 is a flow of a subroutine showing in detail how the information terminal device 10 operates in step S16 of FIG. 4. With reference to FIG. 12, described is the execution processing carried out by the information terminal device 10.

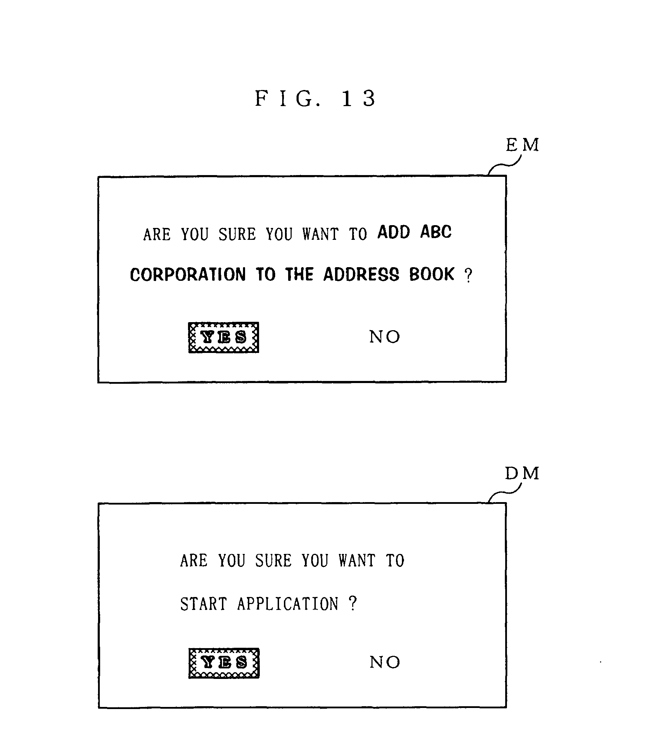

In FIG. 12, the operation control unit 106 calls the execution checking unit 110 for causing an execution checking screen to be displayed on the display unit 19 (step S161). This execution checking screen is displayed for the user to check whether to execute the application. When the extracted message is stored in the message storage unit 109 in step S153, the execution checking screen is partly replaced by the extracted message for display. FIG. 13 is an example execution checking screen displayed in step S161. In the above example of the instruction data 200, "add ABC corporation to the address book." is stored as the extracted message. Therefore, the execution checking screen is partly replaced by the extracted message EM "add ABC corporation to the address book.". That is, "Are you sure you want to add ABC corporation to the address book.?" is displayed as the execution checking screen for prompting the user to answer "Yes" or "No". On the other hand, the default message is stored in the message storage unit 109 in step S154, the preset default message is displayed as the execution checking screen. That is, "Are you sure you want to start application?" is displayed as the execution checking screen for prompting the user to answer "Yes" or "No". The procedure then goes to the next step.

The execution checking unit 110 waits for an instruction for checking execution from the user through the accepting unit 111 in order to determine the relevant application is to be executed or not (step S162). If an instruction for executing the relevant application is inputted in step S162 (that is, if the user selects "Yes" on the execution checking screen of FIG. 13), the procedure goes to the next step S163.

The application executing unit 107 then starts the application corresponding to the instruction data 200 for starting execution (step S163). In the example of the instruction data 200 shown in FIG. 11, based on the element "AddressBook" enclosed by the tags having a name "descriptorType" described in the data block 205, the application executing unit 107 activates, as the relevant application, the element "AddToAddressBook" enclosed by the tags having a name "command" described in the data block 207. This activation is made for making an instruction for adding data to the address book. As the data to be added, the elements enclosed by the tags having the tag name "parameters" described in the data block 208 are given: the element "ABC corporation" enclosed by the tags having the tag name "name", the element "06-1234-5679" enclosed by the tags having the tag name "fax", and the element "06-1234-5678" enclosed by the tags having the tag name "phone" enclosed by the tags having the tag name "parameters". The information terminal device 10 then ends the flow.

On the other hand, if an instruction for not executing the relevant application is inputted in step S162 (that is, if the user selects "No" on the execution checking screen of FIG. 13), the information terminal device 10 does not execute the relevant application, and then ends the flow.

As such, irrespectively of description in the anchor character string of the linking hypertext of the instruction data 200 stored in the server 1, the information terminal device 10 enables the user to view the screen on the display unit 19 for recognizing the processing on the instruction data 200 transmitted from the server 1 and determining whether to execute the processing. Therefore, it is possible to prevent execution of unintended processing caused by the instruction data 200.

In the information terminal device 10, data to be processed may be limited to instruction data with verified digital signature placed based on a known public key encryption scheme. For example, in the above described instruction data 200 shown in FIG. 11, the element "sZsiuHJmx40HwJ6JZzxkiwsq2" enclosed by the tags having a tag name "signature" is included. This element corresponds to the digital signature based on the known public key encryption scheme here in the present embodiment. This digital signature is placed by using a secret key only known to a person authorized to create the instruction data 200. Before the process in step S13 of FIG. 4, the information terminal device 10 verifies the digital signature with a public key corresponding to the secret key. Then, the information terminal device 10 proceeds processing only onto the verified instruction data 200. To the unverified instruction data 200, the information terminal device 10 quits the subsequent processing, and displays a predetermined warning message to the user. Therefore, no processing is carried out onto the instruction data 200 which includes a message and/or instruction tampered by an unauthorized person. In other words, if the instruction data 200 has a verified digital signature, the message describing the processing instruction can be regarded as having been created by the authorized person.

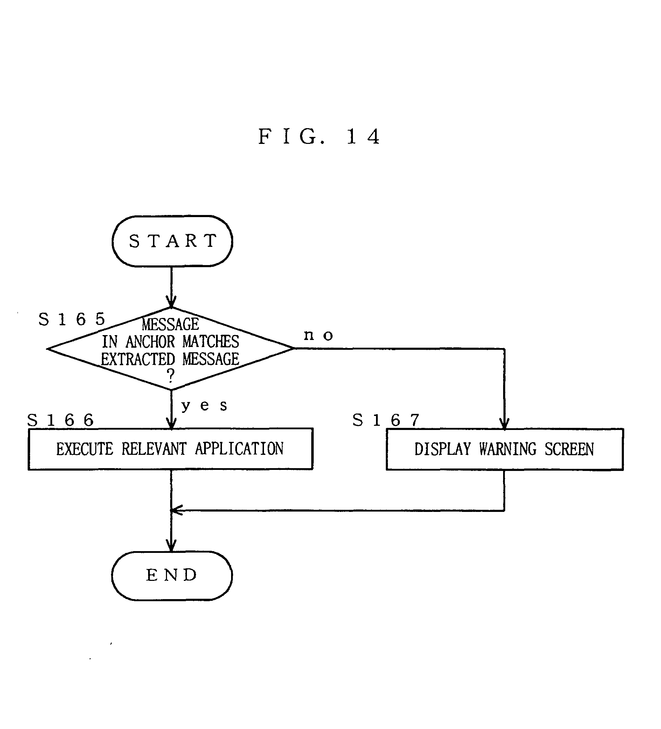

In the above second embodiment, the message describing the processing based on the instruction data 200 is displayed for enabling the user to determine whether to execute the processing. Alternatively, the information terminal device 10 may automatically determine whether to execute the application. FIG. 14 shows a subroutine illustrating the detailed operation of step S16 of FIG. 4 when the information terminal device 10 automatically determines whether to execute the application.

In FIG. 14, the execution checking unit 110 determines whether the anchor character string of the linking hypertext of the instruction data 200 stored in the server matches the characteristic string of the extracted message stored in step S153 (step S165). If the execution checking unit 110 determines in step S165 that the anchor character string matches the character string of the extracted message, the procedure goes to step S166. In step S166, the application execution unit 107 activates the application corresponding to the instruction data 200 for start execution. On the other hand, if the execution checking unit 110 determines in step S165 that the anchor character string does not matches the character string of the extracted message, the procedure goes to step S167. In step S167, the information terminal device 10 does not execute the relevant application, but displays a predetermined warning message on the display unit 19. The procedure then ends.

As such, the above alternative example utilizes the fact that the user has selected the anchor character string of the linking hypertext in the server 1. If the anchor character string matches the extracted message, it is determined that the user allows execution of the corresponding application. Thus, whether to execute the application can be automatically determined. Also, if an unauthorized person has overwritten the anchor character string with a false string, the overwritten anchor character string does not match the extracted message. Therefore, the application corresponding to the instruction data is not executed on the information terminal device. Needless to say, these strings may not match word by word, but may only approximately match with each other in semantics.

In the second embodiment, description text representing the instruction is incorporated in the instruction data in XML. Alternatively, program code such as Java can be used for representing the instruction included in the instruction data.

While the invention has been described in detail, the foregoing description is in all aspects illustrative and not restrictive. It is understood that numerous other modifications and variations can be devised without departing from the scope of the invention.

## Claims

1. An information terminal device (10) for processing an instruction data (200) describing an instruction for processing an application transmitted from a server (1) capable of data communications and stored in said information terminal device, comprising:
a receiving unit (102) for receiving said instruction data (200) transmitted from said server (1);
an analyzing unit (105) for analyzing at least message data representing a message for display to a user and operation data representing an operation both included in said instruction data (200);
an operation control unit (106) for extracting said message data analyzed by said analyzing unit (105), and generating a display message by replacing at least part of a default message previously set for display to the user with the message represented by said message data; and
a display unit (19) for displaying to the user the display message generated by said operation control unit (106).

2. The information terminal device (10) according to claim 1, further comprising:
a determining unit (104) for determining said application corresponding to said instruction data (200); and
an application executing unit (107) for carrying out an operation based on said application determined by said determining unit (104) by following said operation data, wherein
said default message is described in the application determined by said determining unit (104), and
based on the operation of said application executing unit (107), said display unit (19) displays on a screen the display message generated by said operation control unit (106).

3. The information terminal device (10) according to claim 2, wherein
the message represented by said message data is displayed on the screen of said display unit (19) when said application is activated by said application executing unit (107).

4. The information terminal device (10) according to claim 2, wherein
when said operation control unit (106) cannot extract said message data analyzed by said analyzing unit (105), said operation control unit (106) sets said default message as the display message.

5. The information terminal device (10) according to claim 2, wherein
said operation control unit (106) and said application executing unit (107) are previously incorporated in the application.

6. The information terminal device (10) according to claim 2, wherein
said operation control unit (106) and said application executing unit (107) are implemented by a Java applet operated on a Java VM (Virtual Machine), and
said Java applet is retrieved from a server (1) on the Internet.

7. The information terminal device (10) according to claim 1, further comprising:
a determining unit (104) for determining said application corresponding to said instruction data (200);
an execution checking unit (110) for determining whether said application is to be executed based on said message data extracted by said operation control unit (106); and
an application executing unit (107) for carrying out an operation based on said application when it is determined by said execution checking unit (110) that said application is to be executed, by following said operation data analyzed by said analyzing unit (105).

8. The information terminal device (10) according to claim 7, wherein
said message data is a character string describing the instruction of said instruction data (200).

9. The information terminal device (10) according to claim 8, wherein
said display unit (19) displays the display message generated by said operation control unit (106) for prompting the user to answer whether to execute said application, and
when the user enters an answer (111) as to whether to execute said application based on the display message displayed on said display unit (19), said execution checking unit (110) determines whether said application is to be executed.

10. The information terminal device (10) according to claim 8, wherein
when a character string contained in an anchor of linking hypertext of said instruction data (200) stored in said server (1) matches said message data, said execution checking unit (110) determines that said application is to be executed.

11. The information terminal device (10) according to claim 7, wherein
said instruction data (200) includes digital signature data (208) representing validity of said instruction data (200), and
said determining unit (104) further verifies said digital signature data (208) included in said instruction data (200), and determines said application corresponding to said instruction data (200) only when said digital signature data (208) satisfies a predetermined condition.

12. A computer program executed on a computer, said computer program for processing an instruction data (200) describing an instruction for processing an application transmitted from a server (1) capable of data communications and stored in the computer, said computer program comprising:
a receiving step (102) of receiving said instruction data (200) transmitted from said server (1);
an analyzing step (105) of analyzing at least message data representing a message for display to a user and operation data representing an operation both included in said instruction data (200);
an operation controlling step (106) of extracting said message data analyzed in said analyzing step (105), and generating a display message by replacing at least part of a default message previously set for display to the user with the message represented by said message data; and
a displaying step (19) of displaying to the user the display message generated in said operation control step(106).

13. The computer program according to claim 12, further comprising:
a determining step (104) of determining said application corresponding to said instruction data (200); and
an application executing step (107) of carrying out an operation based on said application determined in said determining step (104) by following said operation data, wherein
said default message is described in the application determined in said determining step (104), and
in said displaying step (19), the display message generated in said operation control step (106) is displayed based on the operation in said application executing step (107).

14. The computer program according to claim 13, wherein
the message represented by said message data is displayed on the screen in said displaying step (19) when said application is activated in said application executing step (107).

15. The computer program according to claim 13, wherein
when said message data analyzed in said analyzing step (105) cannot be extracted in said operation controlling step (106), said default message is set as the display message.

16. The computer program according to claim 13, wherein
said operation controlling step (106) and said application executing step (107) are previously incorporated in the application.

17. The computer program according to claim 13, wherein
said operation controlling step (106) and said application executing step (107) are implemented by a Java applet operated on a Java VM (Virtual Machine), and
said Java applet is retrieved from a server (1) on the Internet.

18. The computer program according to claim 12, further comprising:
a determining step (104) of determining said application corresponding to said instruction data (200);
an execution checking step (110) of determining whether said application is to be executed based on said message data extracted in said operation controlling step (106); and
an application executing step (107) of for carrying out an operation based on said application when it is determined in said execution checking step (110) that said application is to be executed, by following said operation data analyzed by said analyzing unit (105).

19. The computer program according to claim 18, wherein
said message data is a character string describing the instruction of said instruction data (200).

20. The computer program according to claim 19, wherein
in said display step (19), the display message generated in said operation control step (106) is displayed for prompting the user to answer whether to execute said application, and
when the user enters an answer (111) as to whether to execute said application based on the display message displayed in said display step (19), whether said application is to be executed is determined in said execution checking step (110).

21. The computer program according to claim 19, wherein
when a character string contained in an anchor of linking hypertext of said instruction data (200) stored in said server (1) matches said message data, it is determined in said execution checking step (110) that said application is to be executed.

22. The computer program according to claim 18, wherein said instruction data (200) includes digital signature data (208) representing validity of said instruction data (200), and
in said determining step (104), said digital signature data (208) included in said instruction data (200) is further verified, and said application corresponding to said instruction data (200) is determined only when said digital signature data (208) satisfies a predetermined condition.
